Europäisches Patentamt

European Patent Office

Office européen des brevets

(11) Veröffentlichungsnummer: **0 214 563**
**A2**

## (12) EUROPÄISCHE PATENTANMELDUNG

(21) Anmeldenummer: 86111933.7

(22) Anmeldetag: 28.08.86

(51) Int. Cl.4: **B60G 3/00** , B60G 11/26 ,
F16F 9/54

(30) Priorität: 07.09.85 DE 3532006

(43) Veröffentlichungstag der Anmeldung:
18.03.87 Patentblatt 87/12

(84) Benannte Vertragsstaaten:
**AT DE FR GB IT NL**

(71) Anmelder: **Willy Scheuerle Fahrzeugfabrik
GmbH & Co.
Öhringer Strasse 16
D-7114 Pfedelbach(DE)**

(72) Erfinder: **Nagel, Hansjörg
Linckestrasse 15
D-7114 Pfedelbach(DE)**
Erfinder: **Schoch, Richard
Joh. Sebastian-Strasse 1
D-7114 Pfedelbach(DE)**

(74) Vertreter: **Dipl.-Phys.Dr. Manitz Dipl.-Ing.
Finsterwald Dipl.-Ing. Grämkow
Dipl.-Chem.Dr. Heyn Dipl.-Phys. Rotermund
Morgan, B.Sc.(Phys)
Seelbergstrasse 23/25
D-7000 Stuttgart 50(DE)**

(54) **Achsabstützung.**

(57) Die Achse (5) ist an einer Schwinge (3) geführt, welche ihrerseits an einem Lagerarm (1) angelenkt und mittels eines Fluid-Verdrängeraggregates (8) abgestützt ist. Durch Unterbringung des Gelenkes zwischen Schwinge (3) und Kolben des Verdrängeraggregates (8) innerhalb des Kolbens lassen sich große Hubwege in kinematisch günstiger Weise verwirklichen. Die Achsabstützung ist in erster Linie für Schwerlastfahrzeuge vorgesehen.

EP 0 214 563 A2

Fig.2

## Achsabstützung

Die Erfindung betrifft eine Achsabstützung für Schwerlastfahrzeuge mit zwischen Gelenken an einer Achse bzw. einem damit verbundenen Teil sowie am Fahrzeugoberbau bzw. an einem damit verbundenen Teil angeordneten, längenveränderbaren Fluid-Abstützaggregat, welches nach Art eines Verdrängeraggregates mit einer das Fluid aufnehmenden Arbeitskammer sowie einem darin einschiebbaren Verdränger ausgebildet ist.

Bei einer aus der FR-PS 23 33 987 bekannten derartigen Achsabstützung ist das Fluid-Abstützaggregat als Kolben-Zylinder-Aggregat ausgebildet, wobei im bzw. am Boden des Zylinders ein Kugelgelenk und an einem aus dem Zylinder herausragenden Teil des Kolbens ein scharnierartiges Gelenk angeordnet sind. Diese Gelenke verbinden das Abstützaggregat einerseits mit einer die Radachse tragenden Schwinge und andererseits mit einem die Schwinge halternden, mit dem Fahrzeugrahmen verbundenen Lagerarm.

Zur Unterbringung des Kugelgelenkes in dem Zylinderboden muß derselbe entsprechend dick und damit unter Vergrößerung der Gesamtabmessungen des Abstützaggregates ausgebildet sein.

Aus der DE-OS 26 39 345 ist eine ähnliche Achsabstützung bekannt, bei der ein aus dem Zylinder herausragendes Teil des Kolbens scharnierartig mit einer die Radachse halternden Schwinge verbunden ist, während der Zylinder durch ein am Zylinderboden angeordnetes Gummipolster gelenkig gelagert ist, welches zwischen dem Zylinderboden und einem Teil eines die Schwinge halternden Tragarmes zwischengeschaltet ist.

Im Übrigen ist die Schwinge nach der DE-OS 26 39 345 in Seitenansicht V-förmig mit nach oben geöffneten Schenkeln ausgebildet, wobei der von der Radachse entferntere V-Schenkel bei vollständig zusammengeschobenem Abstützaggregat etwa horizontal bzw. parallel zur Oberseite des Fahrweges erstreckt ist.

Außerdem ist es allgemein bekannt, Achsabstützungen bei Schwerstlastfahrzeugen mit hydraulischen Verdrängeraggregaten auszurüsten. Dabei sind in der Regel die Verdrängeraggregate mehrerer Achsen miteinander zum Ausgleich sowie mit einem in der Regel pneumatischen Druckspeicher zur Federung hydraulisch verbunden. Durch Zuführen bzw. Ablassen von hydraulischem Medium kann gegebenenfalls auch der Bodenabstand des Fahrzeugoberbaues verändert werden, um beispielsweise das Beladen des Fahrzeuges zu erleichtern.

Allerdings sind der Veränderung des Bodenabstandes insofern Grenzen gesetzt, als die Länge des in der Regel, wie beispielsweise bei den Anordnungen gemäß der FR-PS 23 33 987 und DE-OS 26 39 345, vertikal eingebauten Verdrängeraggregates bei maximal eingeschobenem Verdränger einen Mindestabstand zwischen Achse und Fahrzeugoberbau bzw. -rahmen vorgibt. Zwar ist es theoretisch möglich, das bzw. die Verdrängeraggregate liegend anzuordnen, indem der vertikale Federungshub der Achsen mittels Übertragungselemente in eine im wesentlichen horizontale Bewegung übersetzt und auf das Verdrängeraggregat übertragen wird. Jedoch scheidet eine solche Bauweise bei Schwerstlastfahrzeugen regelmäßig aus, weil eine Vielzahl von Achsen dicht hintereinander angeordnet werden muß und dementsprechend der Raum für die liegende Anordnung der Verdrängeraggregate sowie der bei dieser Anordnung benötigten Übertragungselemente zwischen den Achsen fehlt.

Deshalb ist es Aufgabe der Erfindung, eine Achsabstützung zu schaffen, welche einen großen Hubweg bei geringen Abmessungen, insbesondere in Vertikalrichtung, bietet.

Diese Aufgabe wird dadurch gelöst, daß das verdrängerseitige Gelenk innerhalb des nahezu vollständig in die Arbeitskammer einschiebbaren Verdrängers angeordnet ist.

Dabei ist insbesondere vorgesehen, als Verdrängeraggregat ein Kolben-Zylinder-Aggregat und als kolbenseitiges Gelenk ein Kugelgelenk mit von der kreiszylindrischen Mantelfläche des Kolbens ringförmig umschlossener Kugel anzuordnen, derart, daß der die Kugel umschließende Kolbenbereich bei maximal in den Zylinder eingeschobenem Kolben innerhalb des Zylinders liegt.

Die Erfindung nutzt die Erkenntnis, daß der in die Arbeitskammer bzw. in den Zylinder einschiebbare Teil des Verdrängers bzw. des Kolbens regelmäßig einen hinreichend großen Querschnitt besitzt, um innerhalb desselben gelenkige Verbindungen, insbesondere ein Kugelgelenk, anordnen zu können. Damit läßt sich aber das genannte Gelenk nahezu beliebig tief axial in den Verdränger bzw. Kolben einsetzen, derart, daß die Arbeitskammer bzw. der Zylinder bei maximal zusammengeschobenem Verdränger-bzw. Kolben-Zylinder-Aggregat auch den Bereich des Verdrängers bzw. Kolbens mit dem Gelenk aufnehmen. Somit läßt sich die Länge des Verdrängers bzw. Kolbens in Einschubrichtung nahezu auf das Maß des maximalen Hubweges beschränken, d.h. der Verdränger bzw. der Kolben können insgesamt relativ kurz ausgebildet sein, denn außerhalb des in den Arbeitsraum bzw. Zylinder einschiebbaren Bereiches des Verdrängers bzw. Kolbens wird keinerlei Raum zur Unterbringung des verdränger-bzw. kolbenseitigen Gelenkes benötigt.

Die Anordnung des Kugelgelenkes im Kolben kann von dessen einer Stirnseite aus erfolgen, so daß die Kolbenmantelfläche vollständig glatt, d.h. ohne Unterbrechung durch Öffnungen und/oder eingesetzte Teile od.dgl., ausgeführt sein kann, wie es im Hinblick auf eine möglichste Schonung von Dichtungselementen zweckmäßig ist, welche zwischen Kolben und Zylinder zur Abdichtung des Arbeitsraumes angeordnet sind.

Des weiteren ist zweckmäßigerweise vorgesehen, die Achse an einer in Seitenansicht V-förmigen Schwinge anzuordnen bzw. zu führen, deren mit der Achse verbundener einer V-Abschnitt in einer Mittellage der Schwinge und deren achsferner anderer V-Abschnitt in vollständig eingefederter Lage der Schwinge eine etwa bodenparallele Lage einnimmt, wobei das verdränger -bzw. kolbenseitige Gelenk bzw. die Kugel auf einem etwa senkrecht zum einen V-Abschnitt erstreckten Zapfen od.dgl. angeordnet sind. Wenn darüber hinaus das Verdränger-bzw. Kolben-Zylinder-Aggregat sowohl in Mittellage als auch in vollständig eingefederter Lage der Schwinge etwa senkrecht zur Bodenebene erstreckt ist, so bildet der Zapfen in der Mittellage eine geradlinige Verlängerung des Verdränger-bzw. Kolben-Zylinder-Aggregates, während die Achsen des Aggregates und des Zapfens in voll eingefederter sowie voll ausgefederter Lage der Schwinge jeweils gleich große, jedoch zu entgegengesetzten Seiten geöffnete Winkel bilden. Dementsprechend kann der konstruktiv mögliche maximale Schwenkweg des Zapfens vollständig ausgeschöpft werden.

Weitere bevorzugte Merkmale der Erfindung gehen aus den Unteransprüchen sowie der nachfolgenden Beschreibung eines bevorzugten Ausführungsbeispieles anhand der Zeichnung hervor.

Dabei zeigen

Fig. 1 eine erfindungsgemäße Achsabstützung in Achsansicht, wobei die die Achse führende Längsschwinge eine Mittellage einnimmt,

Fig. 2 eine entsprechende Achsansicht wie in Fig. 1 mit vollständig eingefederter sowie vollständig ausgefederter Längsschwinge,

Fig. 3 eine Draufsicht entsprechend dem Pfeil III in Fig. 1 und

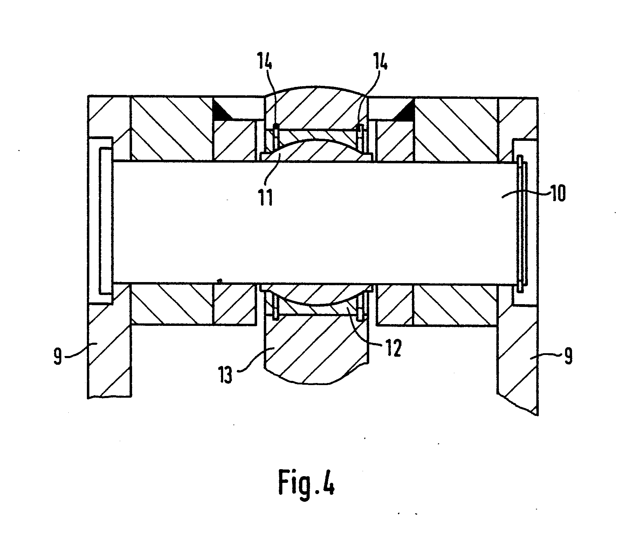

Fig. 4 ein Schnitt des in Fig. 1 oberen Gelenkes des Abstützaggregates entsprechend der Schnittlinie IV-IV in Fig. 1.

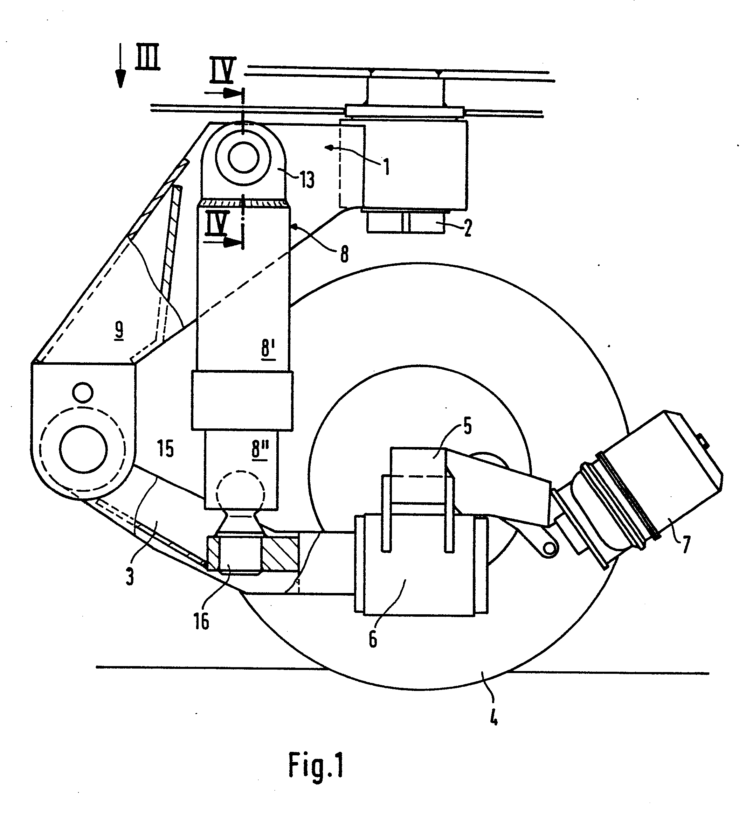

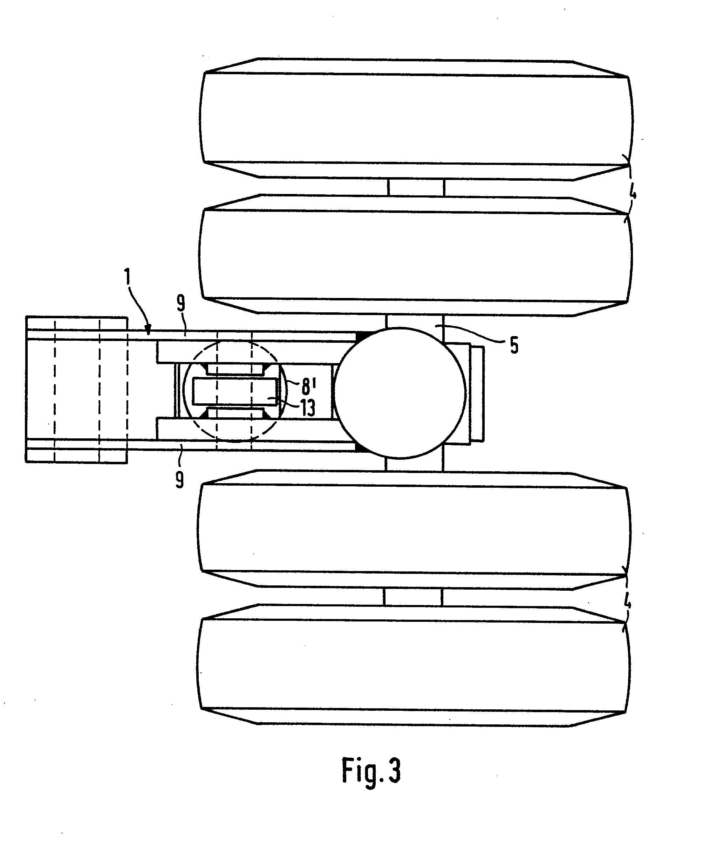

Ein Schwerstlastfahrzeug besitzt typischerweise ein Laufwerk, welches aus einer Vielzahl der in den Fig. 1 bis 3 dargestellten Achsanordnungen besteht, die dazu nebeneinander in sogenannten Achslinien sowie in mehreren Achslinien hintereinander angeordnet sind. Dabei ist jede Einzelachse separat lenkbar.

Jede Achse besitzt einen Lagerarm 1, dessen eines Ende an einem vertikal am Fahrzeugoberbau (nicht dargestellt) angeordneten Lenkzapfen 2 um eine Fahrzeughochachse schwenkbar angeordnet ist. Der Lagerarm 1 erstreckt sich vom Lenkzapfen 2 im wesentlichen nach schräg unten und trägt an seinem vom Lenkzapfen 2 entfernten Ende zwei Lageraugen, zwischen denen eine Längsschwinge 3 um eine horizontale Achse schwenkbar gelagert ist. Die sich unterhalb des Lenkzapfens 2 erstreckende Längsschwinge 3 ist in Seitenansicht V-förmig unter Bildung eines nach oben geöffneten Winkels von ca. 150° mit etwa gleich langen V-Schenkeln ausgebildet.

Die Längsschwinge 3 dient zur Halterung einer an ihren beiden Enden mit Zwillingsrädern 4 bestückten Achse 5, zu deren Anordnung an der Längsschwinge 3 unterhalb der Achse 4 ein hülsenartiges Lagerteil 6 angeordnet ist, welches auf einem das freie Ende der Längsschwinge 3 bildenden Zapfens schwenkgelagert ist, der seinerseits als Teil des achsseitigen V-Schenkels der Längsschwinge 3 in geradliniger Fortsetzung dieses Schenkels angeordnet ist. Dementsprechend kann die Achse 5 zum Ausgleich von Bodenunebenheiten um die Längsachse des achsseitigen V-Schenkels der Längsschwinge 3 pendeln.

Die Achse 5 besitzt ein eigenes Bremsbetätigungsaggregat 7, dessen Gehäuse mit dem achsseitigen V-Schenkel der Längsschwinge 3 einen nach oben geöffneten Winkel bildet, dessen Größe etwa dem V-Winkel der Längsschwinge 3 entspricht.

Zur Abstützung der Längsschwinge 3 gegenüber dem Lagerarm 1 dient ein hydraulisches Kolben-Zylinder-Aggregat 8, dessen Zylinderteil 8' am Lagerarm 1 und dessen Kolben 8" an der Längsschwinge 3 gelenkig gelagert ist.

Zur Lagerung des Zylinderteiles 8' ist am Lagerarm 1 zwischen dessen Seitenwangen 9 mit möglichst großem Bodenabstand ein Zapfenteil 10 angeordnet, welches zwischen den Seitenwangen 9 eine Lagerhülse 11 mit ballig konkaver Außenumfangsfläche trägt. Auf dieser Lagerhülse 11 ist ein ringförmiges Lagerteil 12 mit entsprechend ballig konvexer Innenumfangsfläche sowie einer kreiszylindrischen Außenumfangsfläche gleitgelagert. Das Lagerteil 12 ist seinerseits in einer seiner Außenumfangsfläche angepaßten Öffnung eines am zugewandten Stirnende des Zylinderteiles 8' angeordneten Lagerauges 13 eingesetzt und dort mittels stirnseitig des Lagerteiles 12 angeordneter Federringe 14 axial gesichert, die in entsprechenden Ringnuten der Öffnung des Lagerauges 13 sitzen.

Dementsprechend ist das Zylinderteil 8' des Kolben-Zylinder-Aggregates 8 sowohl zur Achse des Zapfenteiles 10 als auch zu dazu senkrechten Achsen schwenkbar gelagert.

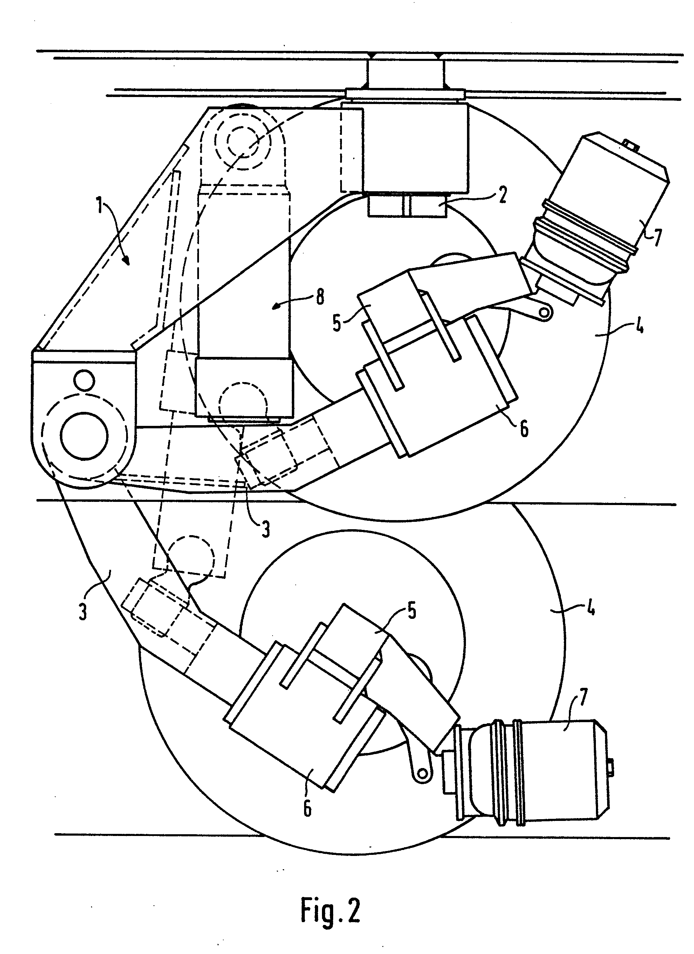

Der Kolben 8" besitzt eine vollständig glatte, kreiszylindrische Mantelfläche, welche in voll eingefederter Lage der Längsschwinge 3 -vgl. den oberen Teil der Fig. 2 -nahezu vollständig in das Zylinderteil 8' eingeschoben ist.

Zur gelenkigen Verbindung des Kolbens 8" mit der Längsschwinge 3 dient ein Kugelgelenk mit einer vom schwingenseitigen Stirnende des Kolbens 8" zugänglichen, innerhalb des Kolbens 8" untergebrachten Gelenkpfanne für einen Kugelkopf 15, welcher seinerseits auf einem an der Längsschwinge 3 angeordneten Zapfen 16 als Teil desselben angeordnet ist. Der Zapfen 16 ist im Bereich des Scheitelpunktes des von der Längsschwinge 3 gebildeten V-Winkel senkrecht zur Längsachse des achsseitigen Schenkels der Schwinge 3 angeordnet.

Gemäß Fig. 1 ist das Gelenk zwischen Kolben 8" und Längsschwinge 3 in der dargestellten Mittellage etwas unterhalb einer bodenparallelen, die Achse 5 enthaltenden Ebene angeordnet, während die Gelenkachse des die Längsschwinge 3 mit dem Lagerarm 1 verbindenden Gelenkes etwas oberhalb dieser Achse verläuft. Des weiteren sind der Kugelkopf 15 sowie der Scheitelpunkt des von der Längsschwinge 3 gebildeten V-Winkels gemäß den Fig. 1 und 2 innerhalb der Kontur der Räder 4 nahe des Außenumfanges derselben angeordnet. Im übrigen nimmt das Kolben-Zylinder-Aggregat 8 in der in Fig. 2 dargestellten Mittellage eine praktisch exakte Vertikallage ein.

Diese Geometrie ist vorteilhaft, weil das Kolben-Zylinder-Aggregat 8 nur wenig aus seiner Vertikallage ausgelenkt wird, wenn die Längsschwinge 3 den konstruktiv möglichen maximalen Schwenkhub mit den in Fig. 2 dargestellten Endlagen ausführt. Dieser Schwenkhub kann aufgrund der Unterbringung des Kugelkopfes 15 im Kolben 8" das gewünschte große Maß besitzen. Damit kann gegebenenfalls auch der Bodenabstand des Fahrzeuges um ein entsprechend großes Maß verändert werden, wobei besonders vorteilhaft ist, daß auch eine niedrige Mindestladehöhe erreichbar ist, weil das Kolben-Zylinder-Aggregat 8 aufgrund der dargestellten gelenkigen Verbindung mit der Längsschwinge 3 mit relativ geringem Bodenabstand angeordnet werden kann.

Da durch die kompaktere Bauweise des Schwingarms die Hebelveränderung für den unteren Anlenkpunkt des Abstützzylinders weitgehend proportional zur Hebelveränderung der Achsanlenkung erfolgt, sind die beim Ausgleich von Fahrbahnunebenheiten zwischen hydraulisch gekoppelten Abstützeinrichtungen auftretenden Achslastveränderungen wesentlich geringer als bei Abstützeinrichtungen mit herkömmlicher Zylinderanordnung.

Schließlich zeichnet sich die dargestellte Achsabstützung trotz des großen möglichen Hubweges sowie der kinematisch günstigen Verhältnisse durch eine besondere Kompaktheit aus, die es ermöglicht, bei gleicher Fahrzeuglänge mehr Achslinien hintereinander anzuordnen. Dies ist gleichbedeutend damit, daß bei gleicher Nutzlast geringere Achslasten oder bei unverändert hoher Achslast höhere Nutzlasten möglich sind. Gegebenenfalls kann auch die Fahrzeuglänge ohne Verminderung der Zahl der Achslinien verkürzt werden.

Da die größere Zahl der möglichen Achsen gleichzeitig bedeutet, daß der Fahrzeugoberbau an entsprechend mehr Punkten abgestützt ist, kann gegebenenfalls auch der Rahmen des Fahrzeugoberbaus zur Erzielung einer Gewichtseinsparung leichter ausgebildet sein, ohne Einschränkungen hinsichtlich der Belastbarkeit hinnehmen zu müssen.

**Ansprüche**

1. Achsabstützung für Schwerlastfahrzeuge mit zwischen Gelenken an einer Achse bzw. einem damit verbundenen Teil sowie am Fahrzeugoberbau bzw. an einem damit verbundenen Teil angeordneten, längenveränderbaren Fluid-Abstützaggregat, welches nach Art eines Verdrängeraggregates mit einer das Fluid aufnehmenden Arbeitskammer sowie einem darin einschiebbaren Verdränger ausgebildet ist,

dadurch gekennzeichnet,

daß das verdrängerseitige Gelenk (Kugelkopf 15) innerhalb eines in die Arbeitskammer (8') einschiebbaren Abschnittes des Verdrängers (8") untergebracht ist.

2. Achsabstützung nach Anspruch 1, dadurch gekennzeichnet, daß als Verdrängeraggregat ein Kolben-Zylinder-Aggregat (8) und als kolbenseitiges Gelenk ein Kugelgelenk (15) mit von der kreiszylindrischen Mantelfläche des Kolbens (8") ringförmig umschlossener Kugel (15) angeordnet ist, welche zusammen mit dem die Kugel umschließenden Kolbenabschnitt in den Zylinder einschiebbar ist.

3. Achsabstützung nach einem der Ansprüche 1 oder 2, dadurch gekennzeichnet, daß die Achse - (5) an einer in Seitenansicht V-förmigen, nach oben geöffneten Schwinge (3) angeordnet bzw. geführt ist, deren mit der Achse (5) verbundener einer V-Schenkel in einer Mittellage der Schwinge (3) und deren achsferner anderer V-Schenkel in vollständig eingefederter Lage der Schwinge (3) eine etwa boden parallele Lage einnehmen, und daß das verdränger- bzw. kolbenseitige Gelenk bzw. die Kugel - (15) auf einem etwa senkrecht zum einen V-Schenkel erstreckten Zapfen (16) od.dgl. an der Schwinge (3) angeordnet ist.

4. Achsabstützung nach Anspruch 3, dadurch gekennzeichnet, daß die Schwinge (3) einen nach oben geöffneten Winkel von etwa 150° bildet.

5. Achsabstützung nach einem der Ansprüche 3 oder 4, dadurch gekennzeichnet, daß das - schwingenseitige Gelenk (15) in Achsansicht der mittels Längsschwinge (3) geführten bzw. getragenen Achse (5) sowie der Scheitelpunkt des von der Schwinge (3) gebildeten V-Winkels innerhalb der Kontur der Räder (4) dieser Achse (5) nahe des Radumfanges angeordnet sind.

6. Achsabstützung nach einem der Ansprüche 1 bis 5, dadurch gekennzeichnet, daß das Verdränger-bzw. Kolben-Zylinder-Aggregat (8) sowohl in Mittellage als auch in vollständig eingefederter Lage der Schwinge (3) etwa senkrecht zur Bodenebene erstreckt ist.

7. Achsabstützung nach einem der Ansprüche 1 bis 6, dadurch gekennzeichnet, daß das - schwingenseitige Gelenk des Verdränger-bzw. Kolben-Zylinder-Aggregates (8) in Mittellage der Schwinge (3) dicht unterhalb einer die Achse (5) enthaltenden bodenparallelen Ebene und die Gelenkachse des Schwingenlagers dicht oberhalb dieser Ebene angeordnet sind.

8. Achsabstützung nach einem der Ansprüche 1 bis 7, dadurch gekennzeichnet, daß die Gelenke des Verdrängerbzw. Kolben-Zylinder-Aggregates - (8) in Achsansicht der Achsabstützung zumindest teilweise im Bereich der Kontur achsseitiger und/oder oberbauseitiger Teile bzw. damit verbundener Teile angeordnet sind.

Fig.1

Fig. 2

0 214 563

Fig.3

Fig.4